(19) Europäisches Patentamt

European Patent Office

Office européen des brevets

(11) **EP 1 270 970 B1**

(12) **EUROPÄISCHE PATENTSCHRIFT**

(45) Veröffentlichungstag und Bekanntmachung des Hinweises auf die Patenterteilung:
**06.07.2005 Patentblatt 2005/27**

(51) Int Cl.⁷: **F16C 11/06**

(21) Anmeldenummer: **02004917.7**

(22) Anmeldetag: **05.03.2002**

(54) **Kardanisches Gelenkager**

Universal joint

Joint de cardan

(84) Benannte Vertragsstaaten:
**AT DE FR GB IT NL**

(30) Priorität: **20.06.2001 DE 20110178 U**

(43) Veröffentlichungstag der Anmeldung:
**02.01.2003 Patentblatt 2003/01**

(73) Patentinhaber: **BÜMACH ENGINEERING INTERNATIONAL B.V.**
**7825 VS Emmen (NL)**

(72) Erfinder: **Büter, Josef**
**49733 Haren / Altenberge (DE)**

(74) Vertreter: **Haussingen, Peter**
**Patentanwalt**
**Alte Promenade 47**
**06526 Sangerhausen (DE)**

(56) Entgegenhaltungen:
**EP-A- 0 913 595**      **DE-A- 19 738 295**
**DE-A- 19 843 333**      **DE-C- 660 407**
**US-A- 3 770 990**

## Beschreibung

Die Erfindung bezeichnet ein Gelenklager, dessen austauschbarer, zweigeteilter Innenring mit einer teilkugelförmigen Oberfläche in der sphärischen Innenfläche eines äußeren, geschlossenen Außenringes gelagert ist, siehe EP-A-913 595, und vorzugsweise eingesetzt wird, um unterschiedliche Achslagen oder fertigungsbedingte Ungenauigkeiten eines Antriebs auszugleichen.

Aus dem Stand der Technik sind die unterschiedlichsten Ausfuhrungsformen von kardanischen Gelenklagern bekannt, die aus einem monolithischen Innenring und einem radial geschlossenen Außenring bestehen. Gewöhnlich weist der Außenring eines Gelenklagers an seinem Innendurchmesser zumeist eine, passend zur teilkugeligen Oberfläche des Innenrings spharisch gekrümmte, als Tragfläche dienende, Innenfläche auf und beide Oberflächen stehen in ständigem Gleitkontakt, wobei diese zueinander beweglich sind. Sie besitzen im Schnittpunkt der drei Raumachsen des schwenkbaren Gleitlagers den Freiheitsgrad drei, gewährleisten in Folge der gelenkigen Lagerung eine biegefreie Belastung des Innenrings, da dieser sich dem jeweiligen Kraftvektor senkrecht zur Rotationsachse zuordnet und es können bei der Bewegungsübertragung größere Krafte aufgenommen werden.

Dem jeweiligen Anwendungszweck zugeordnet sind die verschiedensten Materialpaarungen für Innen- und Außenring im Gebrauch.

In der Technik wird zwischen wartungspflichtigen, wartungsfreien und den wartungsarmen Gelenklagern unterschieden.

Wartungspflichtige Gelenklager werden beispielsweise über eine am Außenring eingebrachte, radial umlaufende Nut mittels einer Bohrung in dieser mit Schmiermitteln versorgt. Wartungsfreie schwenkbare Gleitlager sind mit einer hochverschleißfesten Gleitschicht auf der sphärischen Innenfläche des Außenrings ausgerüstet, zumeist auf Basis von Polytetrafluorethylen, gefüllt mit den jeweiligen Anforderungen angepaßten Füllstoffen. In anderen schwenkbaren Gleitlagern werden auch die klassischen Gleitlagerwerkstoffe, die gute Notlaufeigenschaften aufweisen, wie zum Beispiel Rotguß, eingesetzt.

Zum separaten Austausch eines verschlissenen Innenrings kann der Außenring axial geteilt und über lösbare Verbindungselemente miteinander verbunden sein.

Im Gebrauchsmuster DE 90 16 971 wird ein solches Gelenklager beschrieben, wobei das insbesondere für Stangenköpfe ausgebildete Gelenklager aus einem quer zur Achsrichtung geteilten Außenring mit jeweils einem, an dessen Außenseite umlaufenden, radial nach innen gerichteten Steg geringer axialer Breite, dessen Hälften durch axiale Stehbolzen miteinander verbunden sind und einem Innenring mit sphärischer Mantelfläche besteht. Im montierten Zustand des Gelenklagers liegen die Stege unter Vorspannung auf der Mantelfläche des Innenrings an. Die Gleitfläche des Innenrings wird vom Außenring nicht vollflächig getragen. Mit einem derartigen Gelenklager lassen sich deshalb im Verhältnis zur Lagergröße nur geringe Kräfte übertragen. Zum Austausch des Innenrings ist der Außenring zumindest teilweise zu demontieren.

Andere technische Lösungen zum Austausch des Innenrings eines Gleitlagers mit sphärischen Gleitflächen zwischen Innen- und Außenring ohne Demontage des Außenrings beinhalten speziell ausgebildete Innenringe, die aus mindestens zwei Segmenten bestehen.

So weist das aus der Druckschrift US 3 888 554 bekannte schwenkbare Gleitlager einen Innenring auf, der aus mindestens drei Kugelkalottensegmenten besteht, deren Innenkontur zur formschlüssigen Fixierung an einer Formbüchse dient, wobei die axiale Fixierung der einzelnen Segmente durch umlaufende Borde an der Formbüchse realisiert ist. Eine ähnliche Lösung wird in der Druckschrift US 3 915 518 offenbart. Die Kugelkalottensegmente werden in diesem Fall mittels einer auf der Formbüchse umlaufenden Rippe in axialer Richtung fixiert.

Die Kopplung von Kugelkalottensegmenten an einer Formbüchse wird ebenfalls in der Druckschrift EP 0 913 595 A1 beschrieben, wobei an einer Formbüchse zwischen den Kugelkalottensegmenten Stege zum radialen Fixieren vorhanden sind. Eine weitere Variante eines sphärischen Gleitlagers mit geteiltem Innenring wird ist bekannt, bei dem der Innenring aus mindestens drei Kugelkalottensegmenten besteht, deren Außenkonturen die sphärische Gleitfläche bilden und deren Innenkontur zur formschlüssigen Fixierung an einer Formbüchse mit prismatischer Bohrung angepasst ist. Die Lagefixierung der Kugelkalottensegmente des Innenrings können auch direkt durch die zu lagernde Welle oder Achse erfolgen.

Bei allen Gelenklagern, die in axialer Richtung geteilte Innenringe aufweisen, besteht der Nachteil insbesondere darin, dass neben aufwändigen Herstellungstechnologien ein erhöhter Verschleiss mit vorzeitigem Ausfall des Lagers auftritt. Durch einwirkende dynamische Kräfte werden Verschiebungen der Einzelsegmente bewirkt, die eine Ungleichverteilung der axialen als auch der radialen Belastungen auf der Gleitfläche verursachen.

Die Aufgabe der Erfindung besteht darin, die technischen Vorteile eines monolithischen Innenrings eines nicht demontierbaren Gelenklagers mit denen eines montierbaren, mit einem geteilten Innenring zu kombinieren.

Die Aufgabe wird durch die im Patentanspruch 1 aufgeführten Merkmale gelöst. Bevorzugte Weiterbildungen ergeben sich aus den Unteransprüchen.

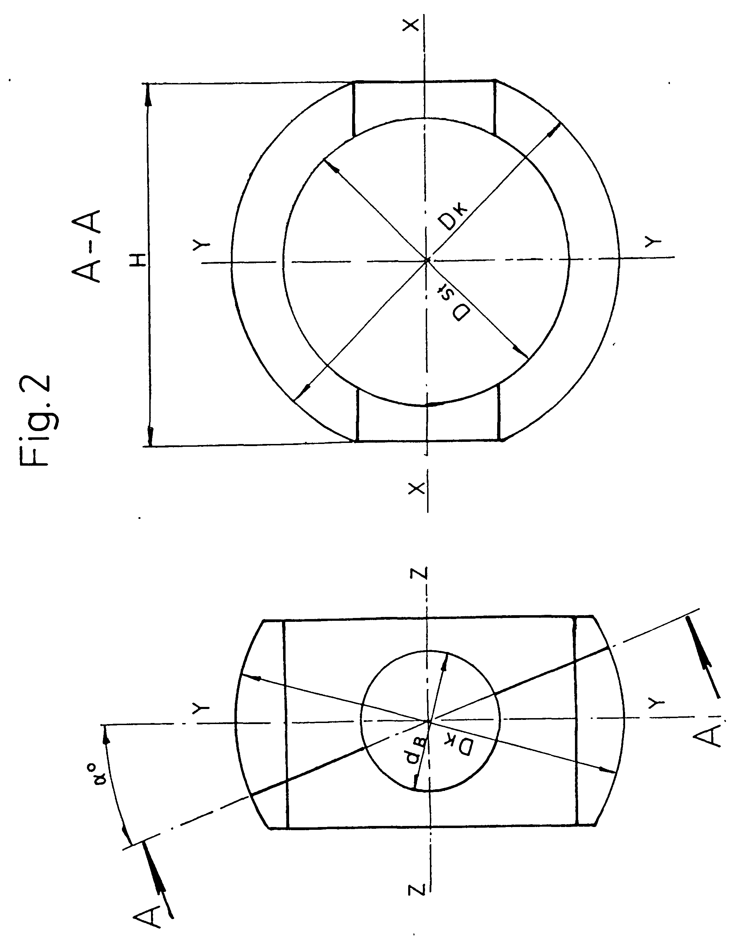

Grundlegend für die Erfindung ist, den Innenring eines Gelenklagers so zu teilen, dass jedes der beiden Teile am Umfang geschlossen bleibt, jeweils eine vollständig geschlossene Stirnfläche aufweist. Hierzu wird, wie in Fig.2 mit den geometrischen Beziehungen, einschließlich der Lage des Teilungsschnitts dargestellt, eine Teilungsebene A-A, die mit einem Winkel $\alpha$ zwischen 18,5° und 22,5° zur, als Ordinate "Y" betrachteten, Symmetrieachse des axialen Schnitts des Innenrings als dessen Hauptachse angeordnet ist, durch den Innenring geführt.

Die Große des Winkel $\alpha$ ist abhängig von der Breite des Innenrings in axialer Richtung z und somit von den Abmessungen des Gelenklagers. Der Winkel $\alpha$ ist so groß zu wählen, dass der, in der Teilungsebene durch den gesamten Querschnitt des Innenrings geführte Schnitt für jede Teilungshälfte einen geschlossenen, ausreichend stabilen Querschnitt im Bereich der geringsten Abmessungen zwischen der Teilungsebene und der Stirnfläche gewährleistet.

Der aus den beiden Teilen zusammengesetzte Innenring verfügt über Bohrungen, die in der Teilungsebene, am größten Durchmesser durch den Querschnitt in Richtung der x - Achse, senkrecht zur Hauptachse, eingebracht sind, wobei der Durchmesser dieser Bohrungen von den Abmessungen des Innenringes, der Breite des Außenrings und dem Winkel $\alpha$ abhängig ist.

Der maximal mögliche Bohrungsdurchmesser hängt andererseits von der axialen Abmessung des Innenrings und dem statisch erforderlichen Mindestquerschnitt zwischen der Bohrungsmantelfläche und Stirnfläche ab.

Des Weiteren ist der Bohrungsdurchmesser mindestens so groß zu wählen, dass die, sich durch die Bohrungen ergebenden, sehnenartigen Abflachungen, die sich am kugelschichtförmigen Außenmantel des geteilten Innenrings gegenüberliegen, einen Abstand "H" auf der x-Achse erzielen, der kleiner ist als der kleinste Durchmesser ($D_{kl}$) des zugehörigen Außenrings mit sphärischer Gleitfläche.

$$H < D_{kl}$$

Der rechnerisch ermittelte Bohrungsdurchmesser $d_b$ wird daher um mindestens 0,5 mm vergrößert.

$$d_b' = d_b + 0,5$$

Hierdurch wird gewährleistet, die Innenringteile in den geschlossenen Außenring einbauen zu können.

Das Maß für den erforderlichen Mindestdurchmesser der Bohrungen ($d_B$) in Abhängigkeit von den Abmessungen des kardanischen Gelenklagers, insbesondere des Innenrings ist durch die folgenden mathematischen Beziehungen bestimmt:

$$d_B = \frac{\dfrac{D_{kl}}{\cos\alpha} \cdot (1 - \cos\alpha)}{\tan(\alpha \cdot 0{,}5)}$$

$D_{kl} \approx D_k \cdot \cos\alpha$ (abhängig vom Winkel der Teilungsebene) Hierbei bedeuten (hierzu auch Fig.2):

$d_B$ = Durchmesser der Bohrungen durch den Mantel des Innenrings in der Teilungsebene in Richtung der z-Achse, senkrecht zur Steckachse eines Gelenklagers

$d_b'$ = auszuführender Bohrungsdurchmesser

$\alpha$ = Winkel zwischen der Teilungsebene A-A des Innenrings und der Hauptachse Y

$D_K$ = äußerer Durchmesser der Gleitfläche, Höhe der Kugelschicht

$H$ = Abstand der sehnenartigen Abflachungen auf der x-Achse, Höhe der Kugelschicht nach Einbringen der Bohrung mit Durchmesser $d_B$

$D_{kl}$ = kleinster Durchmesser des zugehörigen sphärischen Außenrings des Gelenklagers

Bei Einsatz von Gelenklagern mit geteiltem Innenring, dessen Teile einen geschlossenen Querschnitt im Bereich der Stirnflächen aufweisen, wirkt sich besonders vorteilhaft aus, dass es zu keinen Verschiebungen der einzelnen Segmente kommen kann, die eine Ungleichverteilung der axialen als auch radialen Belastungen und damit erhöhten Verschleiß bewirken. Die Gestalt des erfindungsgemäßen Innenrings gewährleistet die technisch notwendige, gleichmäßige Verteilung der Belastungen, so dass der Verschleiß äußerst gering ist. Mit der Möglichkeit den Innenring zu demontieren, aus dem geschlossenen Außenring zu entnehmen, sind die technischen Vorteile eines monolithischen Innenrings mit denen eines montierbaren Gelenklagers vereint. Der Innenring kann bei minimalen Montage- und Arbeitsaufwand gewechselt und/oder spezifischen Erfordernissen angepasst werden.

Die Montage des Innenrings in den sphärischen Außenring erfolgt durch Einlegen der über den Abstand "H", der Gleitfläche des Innenrings, wobei diese erste Innenringhälfte dann koaxial zur Rotationsachse in den Innendurchmesser des Außenrings verschoben und dann in die Gleitfläche des Außenrings geschwenkt wird. Anschließend wird die zweite Innenringhälfte längs der Teilungsebene in das Innere des Außenrings verschoben und in der Weise in der Teilungsebene gedreht, dass der Innenring über den gesamten Durchmesser betrachtet, die gleiche Breite aufweist. Die jeweiligen Halbkreise der Bohrungen im Innenring in der Teilungsebene, in Richtung der x-Achse bilden wieder einer geschlossenen Kreis. In diese Bohrungen können passende Gleitelemente mit speziellen Schmiereigenschaften eingeschoben werden, die dem Innendurchmesser des Innenrings und der Oberflächenkontur der Gleitfläche angepasst sind sowie den gewünschten tribologischen Anforderungen entsprechen.

In einer Variante können die Innenringhälften am kugelschichtförmigen Außenmantel auch nur sehnenartige Abflachungen zur Erzielung des Abstand "H" auf der x-Achse an der Stelle aufweisen, an der sich sonst die Bohrung mit dem Durchmesser $d_B$ befindet.

Es ist ebenfalls möglich, Innenringe aus zwei Hälften herzustellen und einzusetzen, die an einer Seite des Mantels eine Bohrung und gegenüber, auf der anderen Seite eine Abflachung aufweisen.

Durch die Montagemöglichkeit des Innenrings aus zwei Hälften ist es möglich, die sphärische Innenkontur des geschlossenen Außenrings in jedes beliebige Bauteil, das Bestandteil einer Getriebekette ist und als Gelenkpunkt dient, einzuarbeiten, wodurch äußerst raumsparende und kostengünstige Lösungen für diese Mechanismen realisierbar sind.

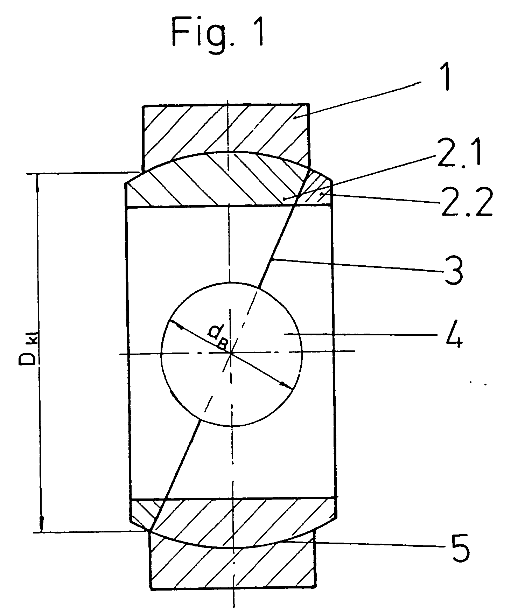

Das in Fig.1 dargestellte Gelenklager besteht aus einem geschlossenen Außenring 1 mit einem Innenring, der aus zwei Innenringhälften 2.1; 2.2 gebildet wird. Die beiden Innenringhalften 2.1; 2.2 sind an ihrer Teilungsebene 3 so angeordnet, dass sich über den Durchmesser die gleiche Breite des Innenrings ergibt, wobei eine radiale Bohrung 4 in der Teilungsebene 3 über den Durchmesser des Innenrings so eingebracht ist, dass sich über die erzielten sehnenartigen Abflachungen mit der Länge des Durchmessers $d_B$ die Innenringhälften 2.1; 2.2 durch Schwenken und Verschieben aus dem Außenring 1 mit seiner sphärischen Innenkontur entnehmen lassen.

Die aus der Bohrung 4 durch den Innenring resultierenden Abflachungen an den Innenringhälften 2.1; 2.2 ergeben an diesen Stellen einen Durchmesser, der kleiner ist als der kleinste Durchmesser des Außenrings, wodurch die Demontierbarkeit gewährleistet ist.

Die Öffnungen der Bohrung 4 im Innenring werden mit Gleitelementen bestückt, die der Oberfläche der Gleitfläche im Außenring und des Innendurchmessers der montierbaren Innenringhälften 2.1; 2.2 angepasst sind, wobei deren Material den tribologischen Anforderungen adäquat ist.

Die Innenringhälften 2.1; 2.2 sind mittels bekannter Verfahren herstellbar. Diese können sowohl mittels geeigneter Trennverfahren, die nur eine geringe Schneidfuge hinterlassen als auch in günstiger Weise durch Anwendung bekannter, spanlos arbeitender Fertigungstechnologien aus, den jeweiligen spezifischen Lageranforderungen genugenden Materialien, hergestellt werden.

Verwendete Bezugszeichen

| | |
|---|---|
| 1 | Außenring |
| 2.1; 2.2 | Innenringhälften |
| 3 | Teilungsebene |
| 4 | Bohrung |
| 5 | sphärische Innenkontur |

## Patentansprüche

**1.** Kardanisches Gelenklager, dessen austauschbarer Innenring, der eine teilkugelförmige Oberfläche aufweist, zwei geteilt ist und in der sphärischen Innenkontur(5) eines geschlossenen Außenrings (1) gelagert ist, **dadurch gekennzeichnet,**

**dass** die Teilung des Innenrings in einer Teilungsebene vorliegt, die einen Winkel zwischen 18,5° und 22,5° zur Symmetrieachse des axialen Schnitts des Innenrings als dessen Hauptachse aufweist und

**dass** die Innenringhälften (2.1; 2.2) am Umfang geschlossen sind sowie im Bereich der geringsten Abmessung zwischen der Teilungsebene (3) sowie der Stirnfläche einen ausreichend stabilen Querschnitt besitzen.

**2.** Kardanisches Gelenklager nach Anspruch 1, **dadurch gekennzeichnet,**
**dass** in der Teilungsebene (3), am Durchmesser, senkrecht zur Hauptachse Bohrungen (4) in den Innenring eingebracht sind.

**3.** Kardanisches Gelenklager nach den Ansprüchen 1 und 2, **dadurch gekennzeichnet,**
**dass** die Verringerung des Durchmessers an der kugelförmigen Oberfläche des Innenrings mit den Abflachungen über der Strecke der Durchmesser der Bohrungen (3) am Umfang vorliegt.

**4.** Kardanisches Gelenklager nach den Ansprüchen 1 bis 3, **dadurch gekennzeichnet,**
**dass** der Innenring in der Teilungsebene (3) am Durchmesser, senkrecht zur Hauptachse Abflachungen aufweist, die zueinander mindestens 0,5 mm kleiner sind als der kleinste Durchmesser des geschlossenen Außenring (1).

**5.** Kardanisches Gelenklager nach den Ansprüchen 1 bis 4, **dadurch gekennzeichnet,**
**dass** in die Bohrungen (4) Gleitelemente eingepasst sind, die der Bohrungskontur des Innenrings und der Oberflächenkontur der Gleitfläche entsprechen.

**6.** Kardanisches Gelenklager nach den Ansprüchen 1 bis 5, **dadurch gekennzeichnet,**
**dass** die Innenringhälften (2.1; 2.2) in die sphärische Innenkontur (5) eines geschlossenen Außenrings (1) eingesetzt sind, der zugleich als Gelenkpunkt eines Getriebeglieds ausgebildet ist.

## Claims

**1.** Cardanic ball and socket joint, of which the exchangeable inner ring, which comprises a partially spherical surface, is divided into two and is mounted in the spherical inner contour (5) of a closed outer ring (1), **characterised in that,**

the inner ring is divided in a plane of division which forms an angle between 18.5° and 22.5° to the axis of symmetry of the axial cross-section of the inner ring as its main axis and

the inner ring halves (2.1, 2.2) are closed at the periphery and have a sufficiently stable cross-section in the region of the smallest dimension between the plane of division (3) and the end surface.

2. Cardanic ball and socket joint as claimed m claim 1, **characterised in that** m the plane of division (3), at the diameter, bores (4) are incorporated into the inner ring perpendicular to the main axis.

3. Cardanic ball and socket joint as claimed in claims 1 and 2, **characterised in that** the reduction in the diameter on the spherical surface of the inner ring is located at the periphery with the flattened areas over the length of the diameters of the bores (3).

4. Cardanic ball and socket joint as claimed in claims 1 to 3, **characterised in that** the inner ring in the plane of division (3) at the diameter has flattened areas perpendicular to the main axis, which with respect to each other are at least 0.5mm smaller than the smallest diameter of the closed outer ring (1).

5. Cardanic ball and socket joint as claimed in claims 1 to 4, **characterised in that** slide elements are fitted into the bores (4), which slide elements correspond to the bore contour of the inner ring and the surface contour of the slide surface.

6. Cardanic ball and socket joint as claimed in claims 1 to 5, **characterised in that** the inner ring halves (2.1, 2.2) are inserted into the spherical inner contour (5) of a closed outer ring (1), which is at the same time formed as an articulation point of a transmission member.

**Revendications**

1. Joint de cardan dont la bague intérieure remplaçable et qui présente une surface partiellement sphérique, est divisée en deux et montée dans le contour intérieur sphérique (5) d'une bague extérieure (1), fermée,

**caractérisé en ce que**

la division de la bague intérieure est faite dans un plan de division faisant un angle compris entre 18,5° et 22,5° par rapport à l'axe de symétrie de la coupe axiale de la bague intérieure pris comme axe principal, et

les moitiés de l'anneau intérieur (2.1 ; 2.2) sont fermées à la périphérie et possèdent une section suffisamment stable dans la zone de la plus petite dimension entre le plan de division (3) et la surface frontale.

2. Joint de cardan selon la revendication 1, **caractérisé en ce que** dans le plan de division (3), au niveau du diamètre, perpendiculairement à l'axe principal, la bague intérieure comporte des perçages (4).

3. Joint de cardan selon les revendications 1 et 2, **caractérisé en ce que** la réduction de diamètre sur la surface de forme sphérique de la bague intérieure correspond en périphérie aux parties aplaties par le chemin diamétral des perçages (4).

4. Joint de cardan selon l'une des revendications 1 à 3, **caractérisé en ce que** dans le plan de division (3) au niveau du diamètre, la bague intérieure présente perpendiculairement à l'axe principal, des parties aplaties inférieures l'une par rapport à l'autre d'au moins 0,5 mm par rapport au plus petit diamètre de la bague extérieure fermée (1).

5. Joint de cardan selon l'une des revendications 1 à 4, **caractérisé en ce que** des éléments de glissement logés dans les perçages (4), correspondent au contour du perçage de la bague intérieure et au contour de la surface supérieure de la surface de glissement.

6. Joint de cardan selon l'une des revendications 1 à 5, **caractérisé en ce que** les moitiés de la bague intérieure (2.1 ; 2.2) sont placées dans le contour intérieur (5), sphérique d'une bague extérieure (1), fermée, cette bague servant en même temps de point d'articulation pour un élément de transmission.

# Fig. 1

# Fig. 2

A–A

EP 1 270 970 B1